# EUROPÄISCHE PATENTSCHRIFT

(11) **EP 1 328 396 B1**
(45) Veröffentlichungstag und Bekanntmachung des Hinweises auf die Patenterteilung: **04.05.2005**
(21) Anmeldenummer: 01978428.9
(22) Anmeldetag: 17.10.2001
(51) Int. Cl.: B29C 49/58, B29C 49/42

(54) **BLASMASCHINE MIT AN DER BLASVORRICHTUNG ANGEBRACHTEN STEUERVENTILEN ZUR STEUERUNG DER BLASLUFT**
BLOW MOLDING MACHINE COMPRISING CONTROL VALVES, WHICH ARE MOUNTED ON THE BLOWING DEVICE AND WHICH CONTROL THE BLOWING AIR
MACHINE DE SOUFFLAGE COMPORTANT DES SOUPAPES DE COMMANDE DE L'AIR DE SOUFFLAGE LOGEES SUR LE DISPOSITIF DE SOUFFLAGE

(30) Priorität: 28.10.2000 DE 20018500 U
(43) Veröffentlichungstag der Anmeldung: 23.07.2003
(73) Patentinhaber: KRONES AG, 93068 Neutraubling (DE)
(72) Erfinder: VOTH, Klaus, 93083 Obertraubling-Piesenkofen (DE); STOIBER, Christian, 93185 Michelsneukirchen (DE)
(86) Internationale Anmeldenummer: PCT/EP2001/012011
(87) Internationale Veröffentlichungsnummer: WO 2002/034500

(56) Entgegenhaltungen:
- DE-A- 2 008 832
- DE-A- 2 657 670
- DE-A- 2 742 693
- DE-U- 9 311 427

## Beschreibung

Die Erfindung betrifft eine Blasmaschine nach dem Oberbegriff des Anspruchs 1.

Derartige Streckblasmaschinen mit mechanischer Reckstange sind in verschiedenen Ausführungen bekannt, wobei die meist rohr- oder glockenartige Blasdüse unmittelbar an die Mündung eines Vorformlings oder an einen diesen tragenden Transportdorn oder an die Blasform gasdicht ansetzbar ist. Bei den bekannten Blasmaschinen sind die Steuerventile für Niederdruckblasluft, Hochdruckblasluft und Entlüftung an einem von der Blasdüse mehr oder weniger entfernten Ort in der Blasmaschine angeordnet und über ggf. flexible Leitungen mit der eigentlichen Blasdüse verbunden (DE 27 42 693 A). Bei den hohen Drücken in derartigen Streckblasmaschinen von z.B. 40 Bar führen diese langen Leitungen zu Verzögerungen beim Blasen bzw. Entlüften und haben daher einen negativen Einfluss auf die aus Leistungsgründen angestrebten kurzen Zykluszeiten für einen Blasvorgang.

Durch die DE 2008832 A ist ferner eine Extrusionsblasmaschine mit einem Blaskopf bekannt, in dem neben der Blasdüse auch ein einziges Einlassventil sowie ein einziges Auslassventil für die Blasluft ausgebildet sind. Diese bekannte Blasmaschine ist auf Grund der fehlenden Reckstange und der fehlenden Hochdruckblasluftzuführung nicht zum Streckblasen von PET-Flaschen oder dgl. geeignet.

Gleiches gilt für die bekannte Extrusionsblasmaschine nach der DE 26 57 670 A, bei der die unmittelbar mit nur einem Blasventil und einem Entlüftungsventil bestückte Blasdüse von einem heb- und senkbaren Füllrohr durchsetzt ist. Dieses kommt erst nach Beendigung des Blasvorgangs zum Einsatz und dient dem Einfüllen eines Füllguts in die frisch geblasene Flasche.

Der Erfindung liegt die Aufgabe zugrunde, eine Blasmaschine mit mechanischer Reckstange aufzuzeigen, die mit sehr kurzen Zykluszeiten arbeiten kann.

Diese Aufgabe wird erfindungsgemäß durch die im Kennzeichen des Anspruchs 1 angegebenen Merkmale gelöst.

Aufgrund der erfindungsgemäßen Integration von Blasdüse und Ventilen für Niederdruckblasluft, Hochdruckblasluft und der Entlüftung ergeben sich einerseits extrem kurze Strömungswege und damit kurze Steuerzeiten. Andererseits wird aufgrund der umfangsmäßig versetzten Anordnung der Ventile trotz der kompakten Bauweise des erfindungsgemäßen "Steuerblocks" ausreichend Platz für großdimensionierte Ventile geschaffen.

Eine besonders kompakte Bauform mit optimalen Strömungsquerschnitten wird realisiert, wenn gemäß vorteilhafter Weiterbildungen der Erfindung der Umfang des Ventilträgers im wesentlichen rechteckig ausgebildet ist und an zwei gegenüberliegenden Seiten seines Umfangs in symmetrischer Anordnung ein Niederdruck-Ventil, ein Hochdruck-Ventil und zwei Entlüftungs-Ventile angeordnet sind.

Gemäß einer anderen vorteilhaften Weiterbildung der Erfindung ist der Ventilträger stationär und die Blasdüse längsbeweglich in der Blasmaschine angeordnet, wobei die Zu- und Abfuhr der Blasluft durch entsprechende Bohrungen im Ventilträger und/oder in der Blasdüse erfolgt. Hierdurch kann auf flexible Anschlussleitungen vollständig verzichtet werden und es sind die Vorteile der Erfindung auch bei einer höhenbeweglichen Blasdüse voll nutzbar.

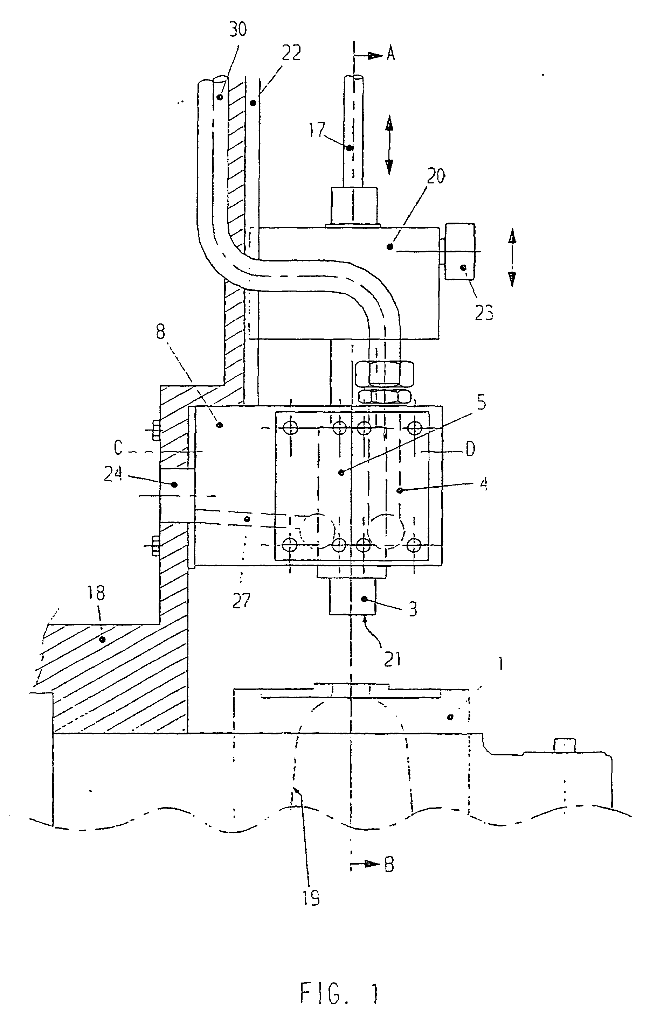

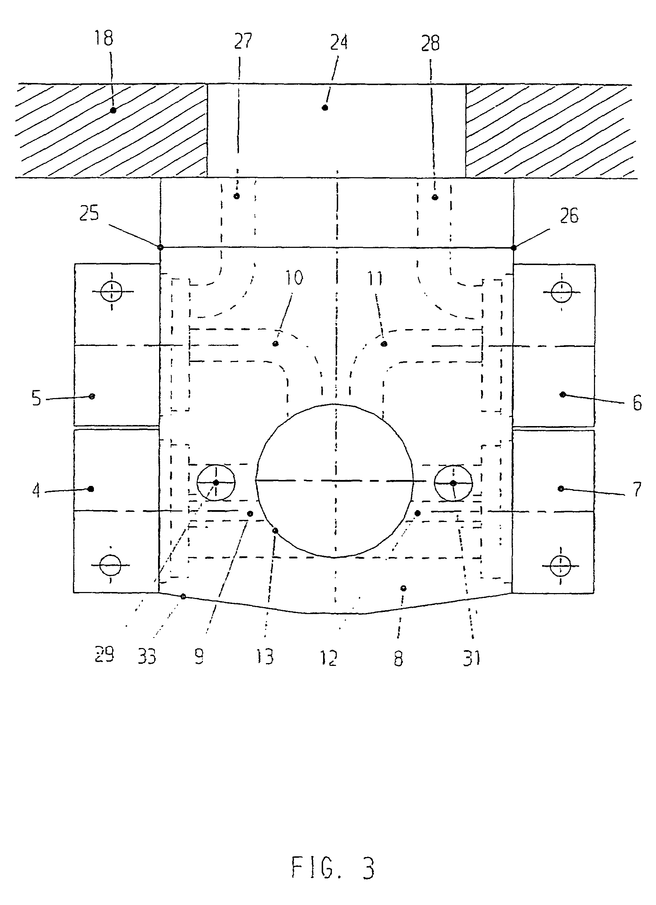

Fig. 3 den Schnitt C D nach Fig. 1.

Die Blasstation nach Fig. 1 bis 3 weist einen stationären oder rotierenden Ständer 18 auf, an dem eine mehrteilige, aufklappbare Blasform 1 üblicher Bauart gelagert ist. Der Hohlraum 19 der Blasform 1 definiert die Kontur der herzustellenden Getränkeflaschen.

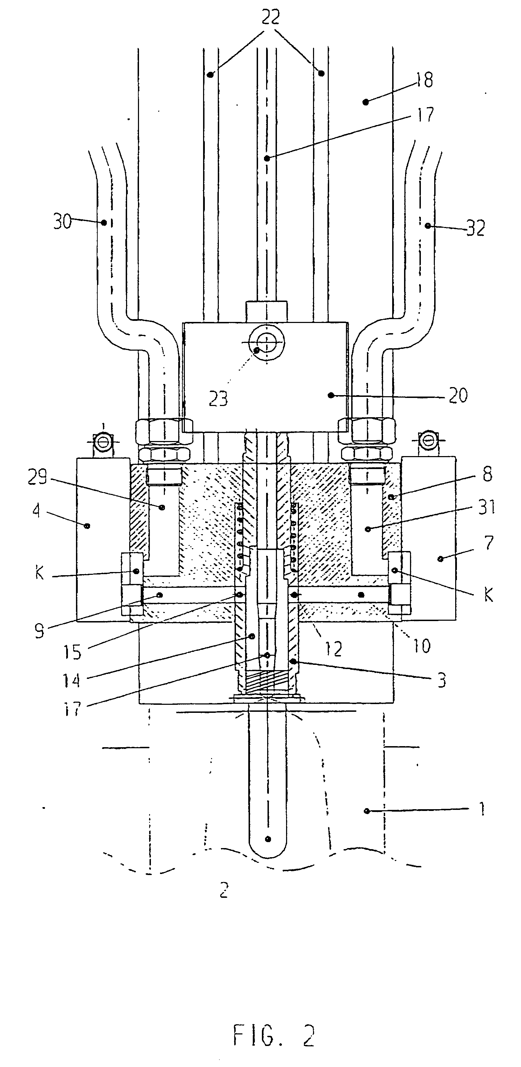

Über der Blasform 1 ist konzentrisch zu deren senkrechter Mittelachse eine rohrartige Blasdüse 3 mit einer am unteren Ende ausgebildeten Öffnung 21 angeordnet. Die Blasdüse 3 ist an einem Schlitten 20 befestigt, der seinerseits höhenbeweglich bzw. parallel zur Mittelachse der Blasform 1 beweglich in einer Geradführung 22 des Ständers 18 geführt ist. Am Schlitten 20 ist eine Kurvenrolle 23 drehbar gelagert. Durch die Kurvenrolle 23 in Verbindung mit einer nicht gezeigten Steuerkurve wird die Höhenbewegung und Position der Blasdüse 3 definiert. In Fig. 1 ist die obere Endposition der Blasdüse 3 gezeigt, in welcher bei aufgeklappter Form 1 ein erwärmter Vorformling 2 aus PET in die Form eingesetzt bzw. eine fertig geformte Flasche aus der Form 1 entnommen werden kann. In Fig. 2 ist die untere Endposition der Blasdüse 3 gezeigt, in der diese an die Mündungsöffnung bzw. an den Halskragen eines in der geschlossenen Blasform 1 sitzenden Vorformlings 2 gasdicht angepresst ist. In dieser Position erfolgt über die Blasdüse 3 die Zufuhr der Niederdruck- und Hochdruckblasluft in den Vorformling 2 sowie nach beendetem Verformungsvorgang die Entlüftung der fertigen Flasche.

Die höhenbewegliche Blasdüse 3 wird im mittleren und oberen Höhenbereich von einem starr am Ständer 18 befestigten, ringartigen Ventilträger 8 voll umfänglich umschlossen. Genauer gesagt ist die Blasdüse 3 mit ihrem zylindrischen Mantel in einer senkrechten Zentralbohrung 13 des Ventilträgers 8 höhenbeweglich geführt und abgedichtet.

Die Blasdüse 3 weist eine Längsbohrung 14 auf, die am unteren Ende die Öffnung 21 bildet. Die Längsbohrung 14 wird von einem höhenbeweglichen Reckdorn 17 mittig durchdrungen, wobei der verbleibende Ringraum zwischen der Längsbohrung 14 und dem Reckdorn 17 den eigentlichen Strömungsweg für die Blasluft bildet. Der Reckdorn 17 ist nach oben hin gasdicht und beweglich aus der Blasdüse 3 bzw. dem diese umgebenden Ventilträger 8 herausgeführt und an einen nicht gezeigten Stellzylinder üblicher Bauart angeschlossen. Durch diesen ist der Reckdorn 17 unabhängig von der Blasdüse 3 heb- und senkbar bzw. positionierbar in der Blasstation angeordnet.

Wie die Fig. 3 zeigt, weist der Ventilträger 8 einen im Wesentlichen rechteckigen Umfang mit senkrechten Flächen auf, von denen zwei parallel zueinander verlaufen. Die dazwischenliegende ebene Fläche liegt am Ständer 18 im Bereich einer Entlüftungsöffnung 24 an.

An den beiden parallelen Seitenflächen 25, 26 des Ventilträgers 8 sind insgesamt vier gleichartige, elektrisch oder pneumatisch betätigte Ventile 4 bis 7 mit einfacher Zwei-Wege- bzw. Auf-Zu-Funktion befestigt. Die beiden dem Ständer 18 benachbarten Ventile 5, 6 dienen der Entlüftung, d.h. der Abfuhr der Blasluft aus der fertig geformten Flasche, und werden in der Regel gemeinsam geschaltet. Das zweite Ventil 4 auf der Seitenfläche 25 steuert die Zufuhr der Niederdruckblasluft in den Vorformling 2, während das zweite Ventil 7 auf der anderen Seitenfläche 26 die Steuerung der Hochdruckblasluft übernimmt. Die Ventile 6, 7 werden in der Regel nacheinander geschaltet. Die Ventile 4 bis 7 sind auf gleicher Höhe angeordnet und umfangsmäßig über den Ventilträger 8 verteilt. Es ist jedoch auch denkbar, die beiden Ventile an einer Seitenfläche übereinander anzuordnen, wobei die umfangsmäßige Verteilung am Ventilträger 8 erhalten bleibt.

Die Ventilkammern K aller vier Ventile 4 bis 7 sind durch direkt in den Ventilträger 8 eingebrachte horizontale Bohrungen 9 bis 12 auf kürzestem Weg mit der Zentralbohrung 13 verbunden. Dies gilt insbesondere für das Niederdruck-Ventil 4 und das Hochdruck-Ventil 7, die näher an der Zentralbohrung 13 sitzen als die beiden Abluft-Ventile 5, 6.

Die Blasdüse 3 weist im oberen Bereich ihrer Längsbohrung 14 mehrere horizontale, kurze Querbohrungen auf, von denen in Fig. 2 die Querbohrungen 15 und 16 zu sehen sind. Durch diese Querbohrungen wird die Längsbohrung 14 und damit die Öffnung 21 der Blasdüse 3 in ihrer Arbeitsposition auf kürzestem Weg mit den Bohrungen 9 bis 12 verbunden.

Die Ventilkammern K der beiden Ventile 5 und 6 sind über weitere Kanäle 27, 28, die in den Ventilträger 8 eingearbeitet sind, mit einer Entlüftungsöffnung 24 im Ständer 18 verbunden, die, ggf. über einen nicht gezeigten Schalldämpfer, ins Freie mündet.

Das Niederdruck-Ventil 4 ist durch einen weiteren Kanal 29 im Ventilträger 8 mit dessen Oberseite verbunden. Dort ist an den Kanal 29 eine starre Druckluftleitung 30 angeschlossen, die zu einer nicht gezeigten Niederdruckluftquelle führt. Entsprechend schließt sich an die Ventilkammer K des Hochdruck-Ventils 7 ein im Inneren des Ventilträgers 8 ausgebildeter Kanal 31 an, an den eine starre Druckluftleitung 32 angeschlossen ist. Diese führt zu einer nicht gezeigten Hochdruckluftquelle.

Anstelle der gezeigten stationären Anordnung des Ventilträgers 8 ist es auch möglich, diesen starr mit der höhenbeweglichen Blasdüse 3 zu verbinden oder gar einstückig mit dieser auszubilden. In diesem Falle sind die Druckluftleitungen 30 und 32 flexibel auszuführen. Weitere Ventile können erforderlichenfalls an der vom Ständer 18 wegweisenden Stirnfläche des Ventilträgers 8 angeordnet werden. In jedem Falle ergibt sich einerseits ein äußerst kompakter, raumsparender Aufbau der Blasdüse mit den zugehörigen Ventilen und andererseits werden kurze und großdimensionierte Strömungswege realisiert.

## Patentansprüche

1. Blasmaschine mit mindestens einer Blasform(1) zum Erzeugen von Hohlkörpern aus erwärmten Vorformlingen(2), mindestens einer Blasdüse (3) zum Einleiten von Blasluft in die Vorformlinge, mindestens einem Niederdruck-Ventil (4), einem Hochdruck-Ventil (7) und einem Entlüftungsventil (5, 6) zur Steuerung der Blasluftzu- und -abfuhr zur bzw. von der Blasdüse sowie mit einem in einer Längsbohrung (14) der Blasdüse(3) verschiebbaren Reckdorn (17), **dadurch gekennzeichnet, dass** ein die Blasdüse (3) zumindest über einen Teil ihrer Höhe ringartig umschließender, vom Reckdorn (17) durchdrungener Ventilkörper (8) vorgesehen ist, dass das Niederdruck-Ventil (4), das Hochdruck-Ventil (7) und das Entlüftungs-Ventil (5, 6) über den Umfang des Ventilträgers (8) verteilt angeordnet sind, und dass die Ventile(4 bis 7) durch Bohrungen (9 bis 12) im Ventilträger (8) mit der Blasdüse (3) verbunden sind.

2. Blasmaschine nach Anspruch 1, **dadurch gekennzeichnet, dass** der ventilträger (8) eine Zentralbohrung (13) aufweist, welche die Blasdüse (3) aufnimmt, und dass die Bohrungen (9 bis 12) in die Zentralbohrung (13) einmünden.

3. Blasmaschine nach Anspruch 1 oder 2, **dadurch gekennzeichnet, dass** die Blasdüse (3) eine Längsbohrung (14) aufweist, die durch mindestens eine Querbohrung (15, 16) mit den Bohrungen (9 bis 12) verbindbar ist.

4. Blasmaschine nach einem der Ansprüche 1 bis 3, **dadurch gekennzeichnet, dass** mindestens zwei Entlüftungs-Ventile (5, 6) über den Umfang des Ventilträgers (8) versetzt angeordnet sind.

5. Blasmaschine nach einem der Ansprüche 1 bis 4, **dadurch gekennzeichnet, dass** der Umfang des Ventilträgers (8) im wesentlichen rechteckig ausgebildet ist und die Ventile (4 bis 7) an zwei gegenüberliegenden Seiten des Umfangs angeordnet sind.

6. Blasmaschine nach Anspruch 4 und 5, **dadurch gekennzeichnet, dass** die Ventile (4 bis 7) und die Bohrungen (9 bis 12) im wesentlichen symmetrisch angeordnet sind.

7. Blasmaschine nach einem der Ansprüche 1 bis 6, **dadurch gekennzeichnet, dass** die Blasdüse (3) längsverschiebbar im Ventilträger (8) gelagert ist, vorzugsweise in dessen Zentralbohrung (13).

## Claims

1. Blow moulding machine having at least one blow mould (1) for producing blown containers from heated parisons (2), at least one blow moulding die (3) for introducing blowing air into the parisons, not less than one low pressure valve (4), one high pressure valve (7) and one venting valve (5, 6) for controlling the input and take-off of blowing air respectively to and from the blow moulding die, and a stretching mandrel (17) adapted to be displaced in a longitudinal bore (14) in the blow moulding die (3),
**characterised in that** there is provided a valve body (8) which annularly encloses the blow moulding die (3) at least for part of its height and is penetrated by the stretching mandrel (17), that the low pressure valve (4), the high pressure valve (7) and the venting valve (5, 6) are arranged spaced around the circumference of the valve holder (8), and that the valves (4 to 7) are connected to the blow moulding die (3) by bores (9 to 12) in the valve holder (8).

2. Blow moulding machine according to claim 1, **characterised in that** the valve holder (8) features a central bore (13) which receives the blow moulding die (3), and that the bores (9 to 12) open out into the central bore (13).

3. Blow moulding machine according to claim 1 or 2, **characterised in that** the blow moulding die (3) features a longitudinal bore (14) which is adapted to be connected to the bores (9 to 12) by at least one transverse bore (15, 16).

4. Blow moulding machine according to any one of claims 1 to 3, **characterised in that** not less than two venting valves (5, 6) are arranged in an offset configuration around the circumference of the valve holder (8).

5. Blow moulding machine according to any one of claims 1 to 4, **characterised in that** the circumference of the valve holder (8) is substantially rectangular in design and the valves (4 to 7) are arranged on two opposing sides of the circumference.

6. Blow moulding machine according to claims 4 and 5, **characterised in that** the valves (4 to 7) and the bores (9 to 12) are arranged in a substantially symmetric configuration.

7. Blow moulding machine according to any one of claims 1 to 6, **characterised in that** the blow moulding die (3) is mounted for longitudinal displacement in the valve holder (8), preferably in the central bore (13) thereof.

## Revendications

1. Machine de soufflage comportant au moins un moule de soufflage (1) pour produire des corps creux à partir de préformes (2) chauffées, au moins une buse de soufflage (3) pour introduire de l'air de soufflage dans les préformes, au moins une soupape basse pression (4), une soupape haute pression (7) et une soupape de ventilation (5, 6) pour commander l'air de soufflage qui est amené à la buse de soufflage ou en est évacué, ainsi qu'un mandrin d'étirage (17) mobile dans un perçage longitudinal (14) de la buse de soufflage (3),
**caractérisée en ce qu'**
un corps de soupape (8) entoure en anneau la buse de soufflage (3) au moins sur une partie de sa hauteur et est traversé par le mandrin d'étirage (14), la soupape basse pression (4), la soupape haute pression (7) et la soupape de ventilation (5, 6) sont réparties sur le pourtour du porte-soupape (8), et les soupapes (4 à 7) sont reliées à la buse de soufflage (3) par des perçages (9 à 12) dans le porte-soupape (8).

2. Machine de soufflage selon la revendication 1,
**caractérisée en ce que**
le porte-soupape (8) présente un perçage central (13) qui reçoit la buse de soufflage (3), et les perçages (9 à 12) débouchent dans le perçage central (13).

3. Machine de soufflage selon la revendication 1 ou 2,
**caractérisée en ce que**
la buse de soufflage (3) présente un perçage longitudinal (14) qui peut être relié aux perçages (9 à 12) par au moins un perçage transversal (15, 16).

4. Machine de soufflage selon l'une des revendications 1 à 3,
**caractérisée en ce qu'**
au moins deux soupapes de ventilation (5, 6) sont disposées en décalage sur le pourtour du porte-soupape (8).

5. Machine de soufflage selon l'une des revendications 1 à 4,
**caractérisée en ce que**
le pourtour du porte-soupape (8) est pratiquement rectangulaire et les soupapes (4 à 7) sont disposées sur deux côtés opposés du pourtour.

6. Machine de soufflage selon les revendications 4 et 5,
**caractérisée en ce que**
les soupapes (4 à 7) et les perçages (9 à 12) sont disposés presque symétriquement.

7. Machine de soufflage selon l'une des revendications 1 à 6,
**caractérisée en ce que**
la buse de soufflage (3) est montée dans le porte-soupape (8), de préférence dans son perçage central (13), pour pouvoir se déplacer longitudinalement.
